# EUROPEAN PATENT APPLICATION

(11) **EP 4 661 568 A1**
(43) Date of publication of application: **10.12.2025**
(21) Application number: 23919043.2
(22) Date of filing: 01.02.2023
(51) Int. Cl.: H04W 72/40

(54) **METHOD AND APPARATUS FOR SENDING SCHEDULING INFORMATION, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/074167
(87) International publication number: WO 2024/159466

(57) **Abstract**

The present disclosure relates to a method and apparatus for sending scheduling information, and a storage medium. The method comprises: a first terminal device sending first scheduling information, wherein the first scheduling information can be used for instructing the first terminal device to send a sidelink positioning reference signal (SL PRS) to a second terminal device. In this way, a scheduling scheme for an SL PRS can be implemented.

## Description

### TECHNICAL FIELD

The present disclosure relates to the field of communication technology, and in particular, to a method, apparatus and storage medium for sending scheduling information.

### BACKGROUND

With the development of wireless communication technology, in order to achieve direct communication between terminal devices, the 3rd Generation Partnership Project (3GPP) defines the communication mode of direct link (also called side link or sidelink). For example, a typical application scenario of direct link is vehicle-to-everything (V2X). In the vehicle-to-everything network, each vehicle can be used as a terminal, and information can be transmitted between terminals through direct links, which can effectively reduce communication delays.

In a direct link communication scenario, in order to locate or measure the distance of a terminal device, the terminal device needs to send and/or receive a direct link positioning reference signal (Sidelink Positioning Reference Signal, SL PRS).

### SUMMARY

The present disclosure provides a method, apparatus and storage medium for sending scheduling information.

According to a first aspect of an embodiment of the present disclosure, a method for sending scheduling information is provided, which is performed by a first terminal device, and the method includes:
sending first scheduling information; wherein the first scheduling information is used to instruct the first terminal device to send a sidelink positioning reference signal (SL PRS) to a second terminal device.

According to a second aspect of an embodiment of the present disclosure, a method for sending scheduling information is provided, which is performed by a network device, and the method includes:
sending a second message to a first terminal device; the second message includes positioning reference signal resource information, the positioning reference signal resource information is used to instruct the first terminal device to determine first scheduling information, and the first scheduling information is used to instruct the first terminal device to send a sidelink positioning reference signal (SL PRS) to the second terminal device.

According to a third aspect of an embodiment of the present disclosure, an apparatus for sending scheduling information is provided, which is applied to a first terminal device, and the apparatus includes:
a first sending module, configured to send first scheduling information; wherein the first scheduling information is used to instruct the first terminal device to send a sidelink positioning reference signal (SL PRS) to a second terminal device.

According to a fourth aspect of an embodiment of the present disclosure, an apparatus for sending scheduling information is provided, which is applied to a network device, and the apparatus includes:
a second sending module, configured to send a second message to a first terminal device; the second message includes positioning reference signal resource information, the positioning reference signal resource information is used to instruct the first terminal device to determine first scheduling information, and the first scheduling information is used to instruct the first terminal device to send a sidelink positioning reference signal (SL PRS) to the second terminal device.

According to a fifth aspect of an embodiment of the present disclosure, a device for sending scheduling information is provided, including:
a processor; and
a memory for storing processor-executable instructions;
wherein the processor is configured to execute steps of the method for sending scheduling information provided in the first aspect of the present disclosure.

According to a sixth aspect of an embodiment of the present disclosure, a device for sending scheduling information is provided, including:
a processor; and
a memory for storing processor-executable instructions;
wherein the processor is configured to execute steps of the method for sending scheduling information provided in the second aspect of the present disclosure.

According to a seventh aspect of an embodiment of the present disclosure, a computer-readable storage medium is provided, on which computer program instructions are stored. When the computer program instructions are executed by a processor, steps of the method for sending scheduling information provided in the first aspect of the present disclosure are implemented.

According to an eighth aspect of an embodiment of the present disclosure, a computer-readable storage medium is provided, on which computer program instructions are stored. When the computer program instructions are executed by a processor, steps of the method for sending scheduling information provided in the second aspect of the present disclosure are implemented.

According to a ninth aspect of an embodiment of the present disclosure, a communication system is provided, including:
a first terminal device, wherein the first terminal device can execute the method for sending scheduling information provided in the first aspect of the present disclosure; and
a network device, wherein the network device can execute the method for sending scheduling information provided in the second aspect of the present disclosure.

The technical solution provided by the embodiment of the present disclosure may include the following beneficial effects: the first terminal device sends the first scheduling information, and the first scheduling information may be used to instruct the first terminal device to send the sidelink positioning reference signal (SL PRS) to the second terminal device. In this way, the scheduling solution of SL PRS may be implemented.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram showing a communication system according to an exemplary embodiment.
FIG. 2 is a flow chart showing a method for sending scheduling information according to an exemplary embodiment.
FIG. 3 is a flow chart showing a method for sending scheduling information according to an exemplary embodiment.
FIG. 4 is a flow chart showing a method for sending scheduling information according to an exemplary embodiment.
FIG. 5 is a flow chart showing a method for sending scheduling information according to an exemplary embodiment.
FIG. 6 is a flow chart showing a method for sending scheduling information according to an exemplary embodiment.
FIG. 7 is a flow chart showing a method for sending scheduling information according to an exemplary embodiment.
FIG. 8 is a flow chart showing a method for sending scheduling information according to an exemplary embodiment.
FIG. 9 is a flow chart showing a method for sending scheduling information according to an exemplary embodiment.
FIG. 10 is a flow chart showing a method for sending scheduling information according to an exemplary embodiment.
FIG. 11 is a flow chart showing a method for sending scheduling information according to an exemplary embodiment.
FIG. 12 is a flow chart showing a method for sending scheduling information according to an exemplary embodiment.
FIG. 13 is a flow chart showing a method for sending scheduling information according to an exemplary embodiment.
FIG. 14 is a block diagram showing a device for sending scheduling information according to an exemplary embodiment.
FIG. 15 is a block diagram showing a device for sending scheduling information according to an exemplary embodiment.
FIG. 16 is a block diagram showing a device for sending scheduling information according to an exemplary embodiment.
FIG. 17 is a block diagram showing a device for sending scheduling information according to an exemplary embodiment.
FIG. 18 is a block diagram showing a device for sending scheduling information according to an exemplary embodiment.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The embodiments described in the following exemplary embodiments do not represent all embodiments consistent with the present disclosure. Instead, they are merely examples of devices and methods consistent with some aspects of the present disclosure as detailed in the appended claims.

It should be noted that all actions of acquiring signals, information or data in the present disclosure are carried out in compliance with the relevant data protection laws and policies of the country of location and with the authorization given by the owner of the corresponding device.

In the description of the present disclosure, the terms used, such as "first", "second", etc., are used to distinguish similar objects and do not have to be understood as a specific order or sequence. In addition, in the description with reference to the accompanying drawings, the same symbols in different drawings represent the same elements unless otherwise stated.

In the description of the present disclosure, unless otherwise specified, "multiple" refers to two or more than two, and other quantifiers are similar. "At least one item (individual)", "one (individual) or multiple items (individual)" or similar expressions refer to any combination of these items (individuals), including any combination of single items (individual) or plural items (individual). For example, at least one item (individual) can represent any number; for another example, one or more items (individuals) of a, b and c can represent: a, b, c, a-b, a-c, b-c, or a-b-c, where a, b, c can be single or multiple. "And/or" is a kind of association relationship describing the associated objects, indicating that there can be three relationships, for example, A and/or B can represent: A exists alone, A and B exist at the same time, and B exists alone, where A and B can be singular or plural. The character "/" indicates that the associated objects before and after are in an "or" relationship. The singular forms of "one", "a", "said" and "the" are also intended to include plural forms unless the context clearly indicates other meanings.

Although operations or steps are described in a specific order in the embodiments or drawings of the present disclosure, it should not be understood as requiring these operations or steps to be performed in the specific order or in the serial order, or requiring all the operations or steps shown to be performed to obtain the desired results. In the embodiments of the present disclosure, if there is no contradiction, these operations or steps can be performed in any order; these operations or steps can also be performed in parallel; or a part of these operations or steps can be performed; operations or steps in multiple embodiments or drawings can also be arbitrarily combined, and the present disclosure does not limit this.

The implementation environment of the embodiments of the present disclosure is first introduced below.

Implementations of the embodiment of the present disclosure can be applied to various communication systems. The communication system may include one or more of the fourth generation (4G), fifth generation (5G) communication systems, and other future wireless communication systems (such as 6G). The communication system may also include a land public mobile communication network (PLMN) network, a device-to-device (D2D) communication system, a machine-to-machine (M2M) communication system, an Internet of Things (IoT) communication system, a vehicle-to-everything (V2X) communication system, or one or more of other communication systems.

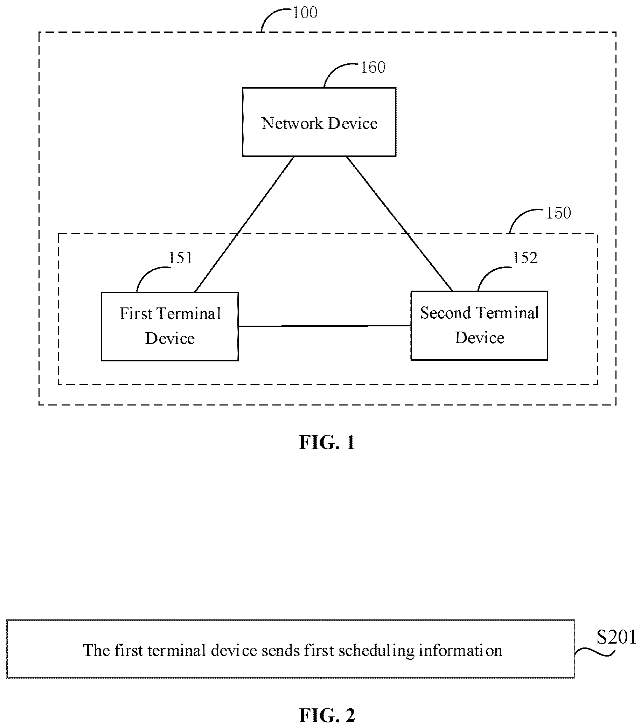

FIG. 1 is a schematic diagram showing a communication system 100 according to an exemplary embodiment. As shown in FIG. 1, the communication system 100 may include a terminal device 150 and a network device 160. The communication system may be used to support 4G network access technology, such as Long Term Evolution (LTE) access technology, or 5G network access technology, such as New Radio Access Technology (New RAT), or other future wireless communication technologies. It should be noted that in the communication system, the number of network devices and terminal devices may be one or more, and the number of network devices and terminal devices of the communication system shown in FIG. 1 is only an adaptive example, which is not limited by the present disclosure.

The network device in FIG. 1 can be used to support terminal access. For example, the network device may include an access network device, which may be an evolutionary Node B (eNB or eNodeB) in LTE; the access network device may also be the next generation Node B (gNB or gNodeB) in a 5G network; the access network device may also be a 5G network radio access network (NG - Radio Access Network, NG-RAN) device; the access network device may also be a base station, a broadband network service gateway (BNG), an aggregation switch or a non-3GPP access device in a future evolved public land mobile network (PLMN). Optionally, the access network device in the embodiments of the present disclosure may include various forms of base stations, such as: macro base stations, micro base stations (also called small stations), relay stations, access points, 5G base stations or future base stations, satellites, transmitting and receiving points (TRP), transmission points (TP), mobile switching centers, and device-to-device (D2D), machine-to-machine (M2M), Internet of Things (IoT), vehicle-to-everything (V2X) or other devices that assume the function of a base station in a communication system, etc., which are not specifically limited in the embodiments of the present disclosure. For the convenience of description, in all embodiments of the present disclosure, the device that provides wireless communication functions for terminal devices is collectively referred to as an access network device or a base station.

In some embodiments, the network device may further include a location management function (LMF). The LMF may be used to provide location-related management functions for the terminal device. The LMF may be a part of the access network device or a network element independent of the access network device.

The terminal device in FIG. 1 may be an electronic device that provides voice or data connectivity. For example, the terminal device may also be referred to as a user equipment (UE), a subscriber unit, a mobile station, a station, a terminal, etc. For example, the terminal device may include a smart phone, a smart wearable device, a smart speaker, a smart tablet, a wireless modem, a wireless local loop (WLL) station, a personal digital assistant (PDA), a customer premise equipment (CPE), etc. With the development of wireless communication technology, devices that can access a communication system, can communicate with network devices of a communication system, can communicate with other objects through a communication system, or can communicate directly between two or more devices can all be terminal devices in the embodiments of the present disclosure; for example, terminals and cars in smart transportation, household devices in smart homes, power meter reading instruments in smart grids, voltage monitoring instruments, environmental monitoring instruments, video monitoring instruments in smart security networks, cash registers, etc. In the embodiments of the present disclosure, the terminal device can communicate with the network device. Multiple terminal devices can also communicate with each other. The terminal device may be statically fixed or mobile, which is not limited by this disclosure.

In some embodiments, the terminal device in FIG. 1 may include a first terminal device 151 and a second terminal device 152, and the first terminal device 151 and the second terminal device 152 may communicate with each other via a direct link (Sidelink). The Sidelink communication between the first terminal device 151 and the second terminal device 152 may include any one or more of unicast, multicast or broadcast. It should be noted that in FIG. 1, the terminal device 150 may also include a third terminal device, a fourth terminal device or more terminal devices; the first terminal device 151 may be one or more, and the second terminal device 152 may also be one or more, which is not limited by the present disclosure.

In some embodiments, the first terminal device may communicate with the network device via a non-direct link, and the non-direct link may include an uplink channel and/or a downlink channel between the first terminal device and the network device. By way of example, the non-direct link may include one or more of PRACH (Physical Random Access Channel), PUCCH (Physical Uplink Control Channel), PUSCH (Physical Uplink Shared Channel), PDSCH (Physical Downlink Shared Channel), PDCCH (Physical Downlink Control Channel), and the like. Similarly, the second terminal device may also communicate with the network device via a non-direct link.

FIG. 2 is a flow chart of a method for sending scheduling information according to an exemplary embodiment. The method may be performed by a first terminal device in the above communication system. As shown in FIG. 2, the method may include:
S201. The first terminal device sends first scheduling information.

The first scheduling information may be used to instruct the first terminal device to send a sidelink positioning reference signal (SL PRS) to the second terminal device.

In some embodiments, the first scheduling information may include at least one of the following:
Priority: The priority may be the priority of the SL PRS corresponding to the first scheduling information.

Resource reservation period: The resource reservation period may be an index in sl-ResourceReservePeriodList, and the sl-ResourceReservePeriodList may be a plurality of resource reservation periods provided by a higher layer (e.g., MAC layer).

Conflict information receiver flag: The conflict information receiver flag can be used to indicate whether the first terminal device can receive conflict information. For example, the conflict information receiver flag can be 1 bit, and its value can be 0 or 1, wherein the conflict information receiver flag being 0 can indicate that the first terminal device cannot be a terminal device that receives conflict information, and the conflict information receiver flag being 1 can indicate that the first terminal device can be a terminal device that receives conflict messages.

A scheduling identifier used to indicate whether the first scheduling information is used for SL PRS transmission: For example, the scheduling identifier being 1 can be used to indicate that the first scheduling information is used for SL PRS transmission; the scheduling identifier being 0 or not present can be used to indicate that the first scheduling information is not used for SL PRS transmission.

SL PRS resource identifier (SL PRS resource ID): The SL PRS resource identifier can be used to indicate the radio resources for sending the SL PRS, such as RE resources or RB resources.

SL PRS resource set identifier (SL PRS resource set ID): The SL PRS resource set ID may be used to indicate a radio resource set for sending the SL PRS, such as REG resources or RBG resources.

SL PRS identifier (SL PRS ID): The SL PRS ID can be used to uniquely identify a SL-PRS resource. For example, it can be used together with the SL-PRS resource ID and the SL-PRS resource set ID to uniquely identify a SL PRS resource. The SL PRS ID can be configured by the network (such as LMF); or from pre-configured information of the UE; or configured to the UE by other UEs, such as through SLPP (Sidelink Positioning Protocol) messages, such as providing auxiliary information messages.

SL PRS sequence ID: An identifier used to indicate the SL PRS sequence.

SL PRS sequence frequency hopping flag: Used to indicate whether to perform SL PRS sequence frequency hopping.

Cyclic shift: Used to indicate the cyclic shift for transmission of the SL PRS.

Comb number: Used to indicate the size of the comb resources occupied by transmission of the SL PRS.

Comb offset: Used to indicate the offset of the comb resources occupied by transmission of the SL PRS.

Repetition number: Used to indicate the number of repetitions of SL PRS.

Number of antenna ports (number of ports): Used to indicate the number of antenna ports for transmission of the SL PRS.

Antenna port index (port index): an identifier of the antenna port for transmission of the SL PRS.

Number of OFDM symbols occupied by SL PRS (number of OFDM symbols): Used to indicate the number of OFDM symbols occupied by transmission of the SL PRS.

SL PRS starting symbol offset (OFDM symbol offset): Used to indicate the starting offset of the OFDM symbol occupied by the transmission of SL PRS.

Frequency hopping flag: Used to indicate whether to perform frequency hopping on the direct link.

Frequency hopping bandwidth: Used to indicate the frequency bandwidth for frequency hopping of the direct link.

Resource pool index: Used to indicate the wireless resources occupied by the direct link.

SL start sub-channel index: Used to indicate the starting number of the sub-carriers occupied by the direct link.

SL sub-channel size: used to indicate the size of the sub-carrier occupied by the direct link.

In some embodiments, the first scheduling information does not include at least one of the following information:
Demodulation reference signal pattern (DMRS pattern);
Number of DMRS ports;
Modulation and Coding Scheme (MCS);
Additional MCS table indicator; and
Physical Sidelink Feedback Channel (PSFCH) overhead indication.

It should be noted that, for specific descriptions of the above information, reference may be made to the description in the 3GPP protocol, which will not be repeated in this disclosure.

Using the above method, the first terminal device sends the first scheduling information, and the first scheduling information can be used to instruct the first terminal device to send the sidelink positioning reference signal (SL PRS) to the second terminal device. In this way, the scheduling scheme of SL PRS can be implemented.

In some embodiments, the first terminal device may send the first scheduling information via a first channel.

The first channel may include a physical sidelink control channel (PSCCH) and/or a physical sidelink shared channel (PSSCH).

In some embodiments, the first terminal device may send the first scheduling information via sidelink control information (SCI).

For example, the first terminal device may send SCI through a first channel, and the SCI may include the first scheduling information.

In some embodiments, after sending the first scheduling information, the first terminal device may send an SL PRS.

For example, the first terminal device may send the SL PRS via a second channel. The second channel may be the same as or different from the first channel.

The second channel may be a PSSCH or a SL PRS dedicated channel, and the SL PRS dedicated channel may be a channel for transmitting the SL PRS.

In some embodiments, after sending the first scheduling information, the first terminal device may wait for a preset time period before sending the SL PRS, wherein the preset time period may be any time period agreed upon by the protocol, such as 4 subframes or 4 slots.

In this way, the first terminal device may first send the first scheduling information corresponding to the SL PRS, and then send the SL PRS, thereby improving the reliability of the SL PRS transmission.

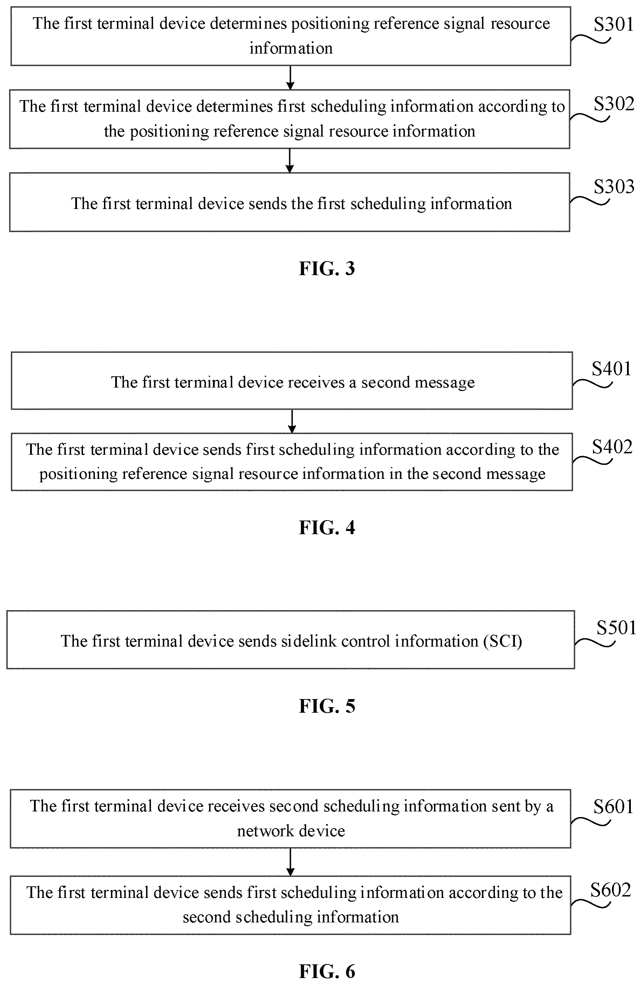

FIG. 3 is a flow chart of a method for sending scheduling information according to an exemplary embodiment. As shown in FIG. 3, the method may include:
S301. The first terminal device determines positioning reference signal resource information.

The positioning reference signal resource information may be used to indicate the wireless resources for transmitting the SL PRS.

In some embodiments, the positioning reference signal resource information may be determined based on first resource information pre-set for the first terminal device.

In some other embodiments, the positioning reference signal resource information may be determined according to a received second message, and the second message may include the positioning reference signal resource information.

In some embodiments, the positioning reference signal resource information may include at least one resource identifier and resource configuration information corresponding to each resource identifier. The resource identifier may include at least one of an SL PRS resource identifier (SL PRS resource ID), an SL PRS resource set identifier (SL PRS resource set ID), and an SL PRS identifiers (SL PRS IDs), and the resource configuration information corresponding to each resource identifier includes at least one of the following:
SL PRS sequence ID;
SL PRS sequence frequency hopping flag used to indicate whether to perform SL PRS sequence frequency hopping;
Cyclic shift;
Comb number;
Comb offset;
Repetition number;
Number of antenna ports (number of ports);
Antenna port index (port index);
Number of symbols occupied by SL PRS (number of OFDM symbols);
Starting symbol offset of SL PRS (OFDM symbol offset);
Frequency hopping flag used to indicate whether frequency hopping is performed (frequency hopping); and
Frequency hopping bandwidth.

It should be noted that the specific meaning of each parameter of the above resource configuration information can be referred to the description in the aforementioned embodiments of the present disclosure and will not be repeated here.

S302. The first terminal device determines first scheduling information according to the positioning reference signal resource information.

For example, the first terminal device may determine resource configuration information using a SL PRS resource identifier or a SL PRS resource set identifier or a SL The PRS identifier and the positioning reference signal resource information to, and the first scheduling information is generated according to the resource configuration information.

S303. The first terminal device sends the first scheduling information.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

In this way, the first terminal device can determine the first scheduling information according to the positioning reference signal resource information, and send the first scheduling information. In this way, the scheduling scheme of the SL PRS can be implemented, and the reliability of the SL PRS transmission can be improved.

FIG. 4 is a flow chart of a method for sending scheduling information according to an exemplary embodiment. As shown in FIG. 4, the method may include:
S401. The first terminal device receives a second message.

The second message may include positioning reference signal resource information.

In some embodiments, the positioning reference signal resource information may include at least one resource identifier and resource configuration information corresponding to each resource identifier. The resource identifier may include at least one of an SL PRS resource identifier, an SL PRS resource set identifier, and an SL PRS identifier, the resource configuration information corresponding to each resource identifier can refer to the description of the aforementioned embodiment of the present disclosure and will not be repeated here.

In some embodiments, the second message is a message sent by a network device to the first terminal device. The network device includes an access network device or a location management function (LMF).

When the network device is an access network device, the second message may include at least one of a radio resource control RRC (Radio Resource Control) message, a media access control control element (MAC CE), downlink control information (DCI), or other messages sent by the access network device to the terminal device.

In the case where the network device is LMF, the second message may include at least one of an LTE Positioning Protocol (LPP) message, a Sidelink LTE Positioning Protocol (SLPP) message, or other messages sent by LMF to the terminal device. It should be noted that LMF may send the second message to the first terminal device through the access network device.

For example, the network device may send a second message including positioning reference signal resource information to the first terminal device.

For another example, the network device may send a second message including the positioning reference signal resource information to both the first terminal device and the second terminal device.

In some other embodiments, the second message is a message sent by a third terminal device to the first terminal device. The third terminal device may be a terminal device that receives the SL PRS (e.g., the second terminal device), or may not be a terminal device that receives the SL PRS.

The second message may include at least one of a direct link radio resource control (Sidelink RRC) message, a direct link media access control control unit (Sidelink MAC CE), a direct link downlink control information (Sidelink DCI), a direct link LTE Positioning Protocol (SLPP) message, or other messages corresponding to the direct link.

By way of example, the third terminal device may be a relay device, and the third terminal device may receive the second message sent by the network device and forward the second message to the first terminal device.

S402. The first terminal device sends first scheduling information according to the positioning reference signal resource information in the second message.

In some embodiments, the first terminal device may determine resource configuration information using the SL PRS resource identifier or the SL PRS resource set identifier or the SL PRS identifier and the positioning reference signal resource information, and the first scheduling information is generated according to the resource configuration information.

In some embodiments, the first scheduling information may include the above-mentioned resource configuration information.

In some other embodiments, the first scheduling information may include at least one of an SL PRS resource identifier, an SL PRS resource set identifier, and an SL PRS identifier, and does not include the above-mentioned resource configuration information.

For example, the first terminal device and the second terminal device may both receive the second message sent by the network device. In this way, the first scheduling information may not include the resource configuration information. When the second terminal device receives the first scheduling information, it may determine the resource configuration information based on at least one of the SL PRS resource identifier, SL PRS resource set identifier, and the SL PRS identifier in the first scheduling information. In this way, the wireless resources occupied by the first scheduling information can be reduced, thereby improving data transmission efficiency.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

Using the above method, the first terminal device can receive the second message, and send the first scheduling information according to the positioning reference signal resource information in the second message, so as to implement the scheduling scheme of SL PRS and improve the reliability of SL PRS transmission.

FIG. 5 is a flow chart of a method for sending scheduling information according to an exemplary embodiment. As shown in FIG. 5, the method may include:
S501. The first terminal device sends sidelink control information (SCI).

The SCI includes the first scheduling information. The SCI may be one or more.

In some embodiments, the SCI may be one, which includes all scheduling information for instructing the first terminal device to send the SL PRS to the second terminal device.

By way of example, the SCI may include all parameters in the above-mentioned first scheduling information.

In one implementation manner, the SCI may be first-stage SCI, and the first-stage SCI may include all parameters in the first scheduling information.

In another implementation manner, the SCI may be second-stage SCI, and the second-stage SCI may include all parameters in the first scheduling information.

In some embodiments, the SCI may include at least one of the following:
Source-side terminal device identifier (Source ID);
Destination-side terminal device identifier (Destination ID);
Cast type indicator;
Channel state information request (CSI request);
Zone ID;
Communication range requirement; and
Providing/Requesting indicator.

In some embodiments, the SCI may not include at least one of the following:
HARQ process number;
New data indicator;
Redundancy version; and
HARQ feedback enabled/disabled indicator.

It should be noted that, for the specific description of the parameters included or not included in the above SCI, reference may be made to the description in the 3GPP protocol, which will not be repeated in this disclosure.

In this way, all scheduling information related to the SL PRS can be sent through one piece of SCI.

In other embodiments, the SCI may include first-stage SCI and second-stage SCI.

The first-stage SCI and the second-stage SCI may respectively include partial scheduling information for instructing the first terminal device to send the SL PRS to the second terminal device.

The first-stage SCI may be carried on the PSCCH, and the first-stage SCI may transmit direct link scheduling information.

The second-stage SCI may be carried on the PSSCH, and the second-stage SCI may transmit direct link scheduling information and/or information related to collaboration between terminal devices.

In some embodiments, the first-stage SCI includes a second-stage SCI format (2^{nd-}stage SCI format) and/or an offset indicator (beta_offset indicator).

It should be noted that for the specific description of the second-stage SCI format and offset indication, reference can be made to the relevant description in the 3GPP protocol, which will not be repeated here.

In some embodiments, the first-stage SCI may also include some parameters in the above-mentioned first scheduling information.

In some embodiments, the second-stage SCI may include at least one of the following:
Source-side terminal device identifier (Source ID);
Destination-side terminal device identifier (Destination ID);
Cast type indicator;
Channel state information request (CSI request);
Zone ID;
Communication range requirement; and
Providing/Requesting indicator.

In some embodiments, the second-stage SCI may not include at least one of the following:
HARQ process number;
New data indicator;
Redundancy version; and
HARQ feedback enabled/disabled indicator.

It should be noted that, for the specific description of the parameters included or not included in the second-stage SCI, reference may be made to the description in the 3GPP protocol, which will not be elaborated in this disclosure.

In some embodiments, the second-stage SCI may also include all or part of the parameters in the above-mentioned first scheduling information.

Using the above manner, the first terminal device can send sidelink control information (SCI), which includes the above first scheduling information, so that the scheduling scheme of SL PRS can be implemented.

FIG. 6 is a flow chart of a method for sending scheduling information according to an exemplary embodiment. As shown in FIG. 6, the method may include:
S601. The first terminal device receives second scheduling information sent by a network device.

The resource indicated by the second scheduling information may be a dynamically scheduled resource or a configured grant (CG) resource.

In some embodiments, when the resources indicated by the second scheduling information are dynamically scheduled resources, the second scheduling information may be scrambled using a first RNTI, and the first RNTI may be a sidelink radio network temporary identifier (SL-RNTI) or a dedicated RNTI (e.g., SL-PRS-RNTI) for SL PRS using dynamically scheduled resources.

In some other embodiments, when the resource indicated by the second scheduling information is a CG resource, the second scheduling information is scrambled with a second RNTI, and the second RNTI is a sidelink configuration scheduling radio network temporary identification (SLCS-RNTI) or a dedicated RNTI (for example, SLCS-PRS-RNTI) for the SL PRS using configured grant resources.

It should be noted that the second scheduling information may be PDCCH scheduling information, or the second scheduling information may be dedicated scheduling information for the network device to schedule the SL PRS.

In some embodiments, the second scheduling information may include at least one of the following:
Priority;
Resource reservation period;
Conflict information receiver flag;
Scheduling identifier indicating whether the first scheduling information is used for SL PRS transmission;
SL PRS resource identifier (SL PRS resource ID);
SL PRS resource set identifier (SL PRS resource set ID);
SL PRS identifier (SL PRS ID);
SL PRS sequence identifier (SL PRS sequence ID);
SL PRS sequence frequency hopping flag used to indicate whether to perform SL PRS sequence frequency hopping;
Cyclic shift;
Comb number;
Comb offset;
Repetition number;
Number of antenna ports (number of ports);
Antenna port index (port index);
Number of symbols occupied by SL PRS (number of OFDM symbols);
Starting symbol offset of SL PRS (OFDM symbol offset);
Frequency hopping flag used to indicate whether frequency hopping is performed (frequency hopping);
Frequency hopping bandwidth;
Resource pool index;
SL start sub-channel index;
SL sub-channel size;
Time offset: used to indicate the time offset for SL-PRS scheduling resources;
Reference time: used to indicate the reference time of SL-PRS scheduling resources;
CG resource index (configured grant index): used to indicate the CG resource used to transmit the SL PRS;
Time gap;
PUCCH resource indicator; and
Counter sidelink assignment index.

It should be noted that, for the specific description of the above-mentioned time gap, PUCCH resource indication and counter sidelink assignment index, reference may be made to the description in the 3GPP protocol. For the specific description of other parameters in the second scheduling information, reference may be made to the description of the above parameters in the first scheduling information in the aforementioned embodiment of the present disclosure, which will not be repeated here.

In some embodiments, the second scheduling information may not include a PSFCH-to-HARQ feedback timing indicator.

S602. The first terminal device sends first scheduling information according to the second scheduling information.

In some embodiments, the first terminal device may determine the first scheduling information based on the second scheduling information and send the first scheduling information.

In some embodiments, the first terminal device may send SCI according to the second scheduling information, and the SCI may include the first scheduling information.

The first scheduling information may be used to instruct the first terminal device to send a sidelink positioning reference signal (SL PRS) to the second terminal device.

In some embodiments, the first terminal device may use the second scheduling information as the first scheduling information.

In other embodiments, the first terminal device may use part of the information in the second scheduling information as the first scheduling information.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

In this way, the first terminal device can receive the second scheduling information sent by the network device, and send the first scheduling information according to the second scheduling information, thereby implementing the scheduling scheme of the SL PRS.

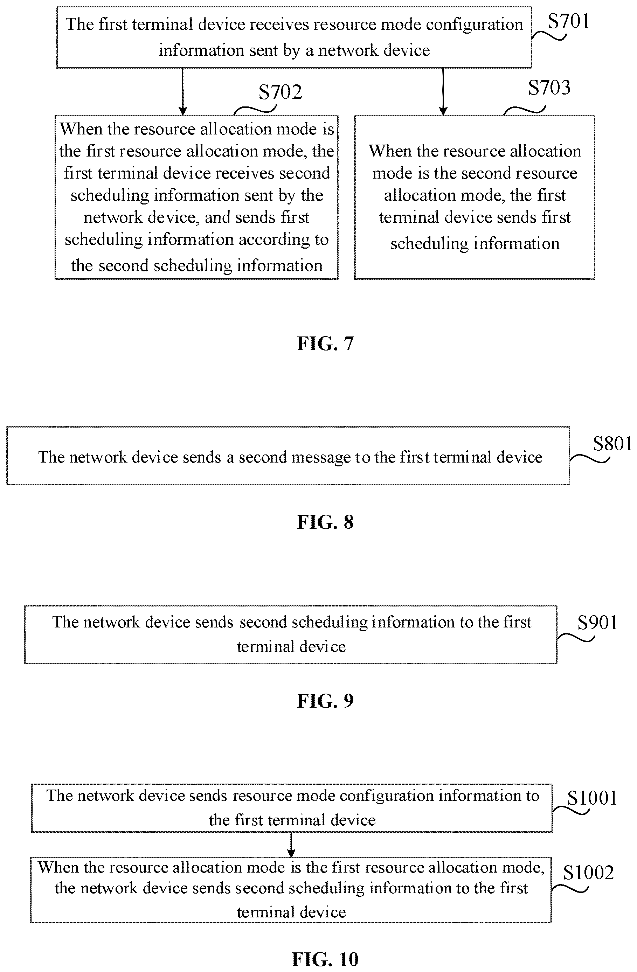

FIG. 7 is a flow chart of a method for sending scheduling information according to an exemplary embodiment. As shown in FIG. 7, the method may include:
S701. The first terminal device receives resource mode configuration information sent by a network device.

The resource mode configuration information is used to indicate the resource allocation mode of the SL PRS. The resource allocation mode may be a first resource allocation mode (mode 1) based on resource selection by a network device or a second resource allocation mode (mode 2) based on resource selection by a terminal device.

In some embodiments, the resource mode configuration information is used to separately indicate the resource allocation mode of the SL PRS.

In some other embodiments, the resource mode configuration information is used to indicate the resource allocation mode of the direct link, and the SL PRS can reuse the resource allocation mode of the direct link.

S702. When the resource allocation mode is the first resource allocation mode, the first terminal device receives second scheduling information sent by the network device, and sends first scheduling information according to the second scheduling information.

S703: When the resource allocation mode is the second resource allocation mode, the first terminal device sends first scheduling information.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

In this way, the first terminal device can receive the resource mode configuration information sent by the network device, and send the first scheduling information according to the resource allocation mode, so as to implement the scheduling scheme of the SL PRS.

FIG. 8 is a flow chart of a method for sending scheduling information according to an exemplary embodiment. The method may be performed by a network device in the above communication system. As shown in FIG. 8, the method may include:
S801. The network device sends a second message to the first terminal device.

The second message may include positioning reference signal resource information, and the positioning reference signal resource information may be used to instruct the first terminal device to determine first scheduling information, and the first scheduling information may be used to instruct the first terminal device to send a sidelink positioning reference signal (SL PRS) to the second terminal device.

In some embodiments, the positioning reference signal resource information may include at least one resource identifier and resource configuration information corresponding to each resource identifier. The resource identifier may include at least one of an SL PRS resource identifier (SL PRS resource ID), an SL PRS resource set identifier (SL PRS resource set ID), and an SL PRS identifier (SL PRS ID), and the resource configuration information corresponding to each resource identifier includes at least one of the following:
SL PRS sequence ID;
SL PRS sequence frequency hopping flag used to indicate whether to perform SL PRS sequence frequency hopping;
Cyclic shift;
Comb number;
Comb offset;
Repetition number;
Number of antenna ports (number of ports);
Antenna port index (port index);
Number of symbols occupied by SL PRS (number of OFDM symbols);
Starting symbol offset of SL PRS (OFDM symbol offset);
Frequency hopping flag used to indicate whether frequency hopping is performed (frequency hopping);
Frequency hopping bandwidth;
Resource pool index;
SL start sub-channel index; and
SL sub-channel size.

It should be noted that the specific meaning of each parameter of the above resource configuration information can be referred to the description in the aforementioned embodiments of the present disclosure and will not be repeated here.

It should also be noted that, in the absence of contradiction, this embodiment can be combined with the aforementioned embodiments or implementation methods of the present disclosure and their various optional implementations.

Using the above method, the network device sends a second message to the first terminal device; wherein the second message includes positioning reference signal resource information, the positioning reference signal resource information is used to instruct the first terminal device to determine first scheduling information, and the first scheduling information is used to instruct the first terminal device to send a sidelink positioning reference signal (SL PRS) to the second terminal device. In this way, the scheduling scheme of SL PRS can be implemented.

FIG. 9 is a flow chart of a method for sending scheduling information according to an exemplary embodiment. As shown in FIG. 9, the method may include:
S901. The network device sends second scheduling information to the first terminal device.

The second scheduling information may be used to instruct the first terminal device to determine the first scheduling information.

In some embodiments, the second scheduling information may include at least one of the following:
Priority;
Resource reservation period;
Conflict information receiver flag;
Scheduling identifier indicating whether the first scheduling information is used for SL PRS transmission;
SL PRS resource identifier (SL PRS resource ID);
SL PRS resource set identifier (SL PRS resource set ID);
SL PRS identifier (SL PRS ID);
SL PRS sequence identifier (SL PRS sequence ID);
SL PRS sequence frequency hopping flag used to indicate whether to perform SL PRS sequence frequency hopping;
Cyclic shift;
Comb number;
Comb offset;
Repetition number;
Number of antenna ports (number of ports);
Antenna port index (port index);
Number of symbols occupied by SL PRS (number of OFDM symbols);
Starting symbol offset of SL PRS (OFDM symbol offset);
Frequency hopping flag used to indicate whether frequency hopping is performed (frequency hopping);
Frequency hopping bandwidth;
Resource pool index;
SL start sub-channel index;
SL sub-channel size;
Time offset;
Reference time;
CG resource index (configured grant index);
Time gap;
PUCCH resource indicator; and
Counter sidelink assignment index.

It should be noted that the specific meaning of each parameter of the above-mentioned second scheduling information can be referred to the description in the aforementioned embodiment of the present disclosure and will not be repeated here.

It should also be noted that, in the absence of contradiction, this embodiment can be combined with the aforementioned embodiments or implementation methods of the present disclosure and their various optional implementations.

In some embodiments, the second scheduling information may not include a PSFCH-to-HARQ feedback timing indicator.

Using the above method, the network device sends the second scheduling information to the first terminal device, wherein the second scheduling information can be used to instruct the first terminal device to determine the first scheduling information. In this way, the scheduling scheme of SL PRS can be implemented.

FIG. 10 is a flow chart of a method for sending scheduling information according to an exemplary embodiment. As shown in FIG. 10, the method may include:
S1001. The network device sends resource mode configuration information to the first terminal device.

The resource mode configuration information is used to indicate the resource allocation mode of the SL PRS, and the resource allocation mode may be a first resource allocation mode based on resource selection by a network device or a second resource allocation mode based on resource selection by a terminal device.

S1002. When the resource allocation mode is the first resource allocation mode, the network device sends second scheduling information to the first terminal device.

The second scheduling information may be used to instruct the first terminal device to determine the first scheduling information.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

Using the above method, the network device sends resource mode configuration information to the first terminal device, and when the resource allocation mode is the first resource allocation mode, sends the second scheduling information to the first terminal device. In this way, the scheduling scheme of SL PRS can be implemented.

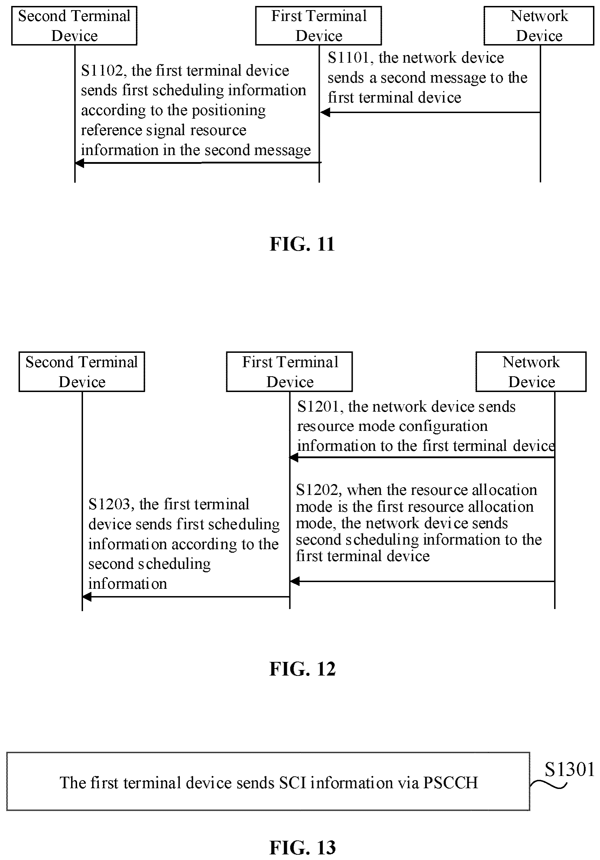

FIG. 11 is a flow chart of a method for sending scheduling information according to an exemplary embodiment. As shown in FIG. 11, the method may include:
S1101. The network device sends a second message to the first terminal device.

The second message may include positioning reference signal resource information.

S1102. The first terminal device sends first scheduling information according to the positioning reference signal resource information in the second message.

In some embodiments, the first terminal device may send the SL PRS after sending the first scheduling information.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

Using the above method, the scheduling scheme of SL PRS can be implemented.

FIG. 12 is a flow chart of a method for sending scheduling information according to an exemplary embodiment. As shown in FIG. 12, the method may include:
S1201. The network device sends resource mode configuration information to the first terminal device.

The resource mode configuration information is used to indicate the resource allocation mode of the SL PRS, and the resource allocation mode may be a first resource allocation mode based on resource selection by a network device or a second resource allocation mode based on resource selection by a terminal device.

S1202. When the resource allocation mode is the first resource allocation mode, the network device sends second scheduling information to the first terminal device.

S1203. The first terminal device sends first scheduling information according to the second scheduling information.

For example, the first terminal device may determine the first scheduling information based on the second scheduling information, and send the first scheduling information.

In some embodiments, the first terminal device may send the SL PRS after sending the first scheduling information.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

In this way, the first terminal device can receive the second scheduling information sent by the network device, and send the first scheduling information according to the second scheduling information, thereby implementing the scheduling scheme of the SL PRS.

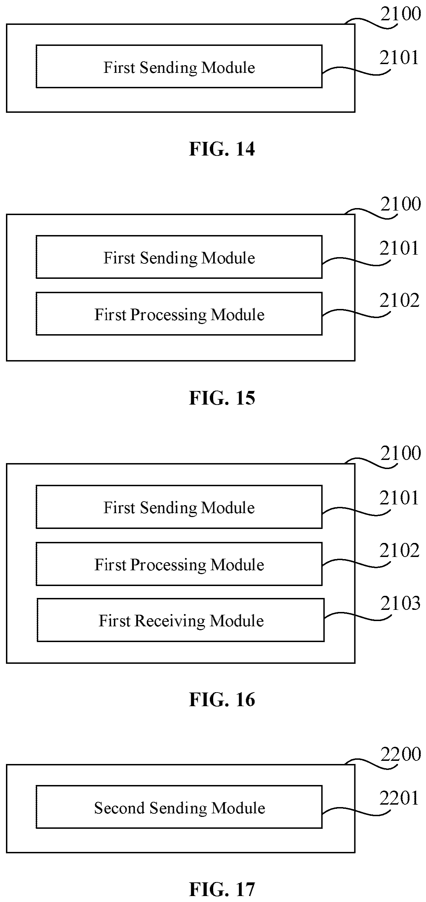

FIG. 13 is a flow chart of a method for sending scheduling information according to an exemplary embodiment. As shown in FIG. 14, the method may include:
S1301. The first terminal device sends SCI information via PSCCH.

The SCI information may include scheduling information of the SL PRS.

In some embodiments, the SL PRS may be transmitted via the PSSCH or a SL PRS dedicated channel.

In some embodiments of the present disclosure, the SCI information may include at least one of the following:
Priority;
Resource reservation period;
Conflict information receiver flag;
Scheduling identifier indicating whether the first scheduling information is used for SL PRS transmission;
SL PRS resource identifier (SL PRS resource ID);
SL PRS resource set identifier (SL PRS resource set ID);
SL PRS identifier (SL PRS ID);
SL PRS sequence identifier (SL PRS sequence ID);
SL PRS sequence frequency hopping flag used to indicate whether to perform SL PRS sequence frequency hopping;
Cyclic shift;
Comb number;
Comb offset;
Repetition number;
Number of antenna ports (number of ports);
Antenna port index (port index);
Number of symbols occupied by SL PRS (number of OFDM symbols);
Starting symbol offset of SL PRS (OFDM symbol offset);
Frequency hopping flag used to indicate whether frequency hopping is performed (frequency hopping);
Frequency hopping bandwidth;
Resource pool index;
SL start sub-channel index; and
SL sub-channel size.

The above-mentioned SL PRS resource ID or SL PRS resource set ID and its corresponding SL PRS resource/resource set configuration information can be configured to the first terminal device by the access network device (such as a base station) through an RRC message, or configured to the first terminal device by the LMF through LPP/SLPP, or indicated to the first terminal device by another terminal device (such as a third terminal device) through SLPP or RRC message, or is information pre-configured for the first terminal device.

It should be noted that the above SL PRS resource ID or SL PRS resource set ID and its corresponding SL PRS resource/resource set configuration information may be referred to as positioning reference signal resource information. The positioning reference signal resource information may include at least one of the following:
SL PRS resource identifier (SL PRS resource ID);
SL PRS resource set identifier (SL PRS resource set ID);
SL PRS identifier (SL PRS ID);
SL PRS sequence identifier (SL PRS sequence ID);
SL PRS sequence frequency hopping flag used to indicate whether to perform SL PRS sequence frequency hopping;
Cyclic shift;
Comb number;
Comb offset;
Repetition number;
Number of antenna ports (number of ports);
Antenna port index (port index);
Number of symbols occupied by SL PRS (number of OFDM symbols);
Starting symbol offset of SL PRS (OFDM symbol offset);
Frequency hopping flag used to indicate whether frequency hopping is performed (frequency hopping); and
Frequency hopping bandwidth.

In some embodiments of the present disclosure, the SCI information does not include at least one of the following:
Demodulation reference signal pattern (DMRS pattern);
Number of DMRS ports;
Modulation and Coding Scheme (MCS);
Additional MCS table indicator; and
Physical Sidelink Feedback Channel (PSFCH) overhead indication.

In some embodiments of the present disclosure, the SCI may be a first-stage SCI, or the SCI may be a complete SCI.

In some embodiments, if the SCI is a first-stage SCI, the SCI may further include at least one of the following:
2^{nd}-stage SCI format; and
Offset indicator (beta_offset indicator).

In some embodiments, if the SCI is a first-stage SCI, the scheduling information of the SCI may be used to schedule the SL PRS and the second-stage SCI. The second-stage SCI may be sent through the PSSCH.

In some embodiments, the second-stage SCI may include at least one of the following:
Source-side terminal device identifier (Source ID);
Destination-side terminal device identifier (Destination ID);
Cast type indicator;
Channel state information request (CSI request);
Zone ID;
Communication range requirement; and
Providing/Requesting indicator.

In some embodiments, the second-stage SCI may not include at least one of the following:
HARQ process number;
New data indicator;
Redundancy version; and
HARQ feedback enabled/disabled indicator.

In some embodiments, if the SCI is a complete SCI (i.e., without distinguishing stages), the SCI may further include at least one of the following:
Source-side terminal device identifier (Source ID);
Destination-side terminal device identifier (Destination ID);
Cast type indicator;
Channel state information request (CSI request);
Zone ID;
Communication range requirement; and
Providing/Requesting indicator.

In some embodiments, if the SCI is a complete SCI (i.e., without distinguishing stages), then the SCI may not include at least one of the following:
HARQ process number;
New data indicator;
Redundancy version; and
HARQ feedback enabled/disabled indicator.

In some embodiments of the present disclosure, before sending SCI information via PSCCH, the first terminal device may receive second scheduling information (the second scheduling information may also be referred to as SL PRS scheduling information) sent by the access network device via PDCCH.

The second scheduling information is dynamic scheduling, or the second scheduling information is scheduling information of Configured Grant Type 2.

In some embodiments, if the second scheduling information is dynamic scheduling, the second scheduling information may be scrambled by SL-RNTI, or scrambled by SL PRS dynamic scheduling dedicated RNTI identifier, such as scrambled by SL-PRS-RNTI.

In some embodiments, if the second scheduling information is a configured grant, the second scheduling information may be scrambled by SLCS-RNTI, or scrambled by SL PRS configured grant dedicated RNTI identifier, such as scrambled by SLCS-PRS-RNTI.

In some embodiments, the second scheduling information may include at least one of the following information:
Time gap;
Resource pool index;
SL start sub-channel index;
SL sub-channel size;
Comb number corresponding to the SL PRS;
Comb offset corresponding to SL PRS;
The number of symbols occupied by SL PRS (number of OFDM symbols);
The starting symbol offset of SL PRS (OFDM symbol offset);
SL PRS sequence ID;
Whether to perform SL PRS sequence frequency hopping;
Whether to perform SL PRS frequency domain hopping;
Number of antenna ports (number of ports);
Antenna port index (port index);
Number of repetitions of SL PRS;
Time offset;
Reference time;
PUCCH resource indicator;
CG resource identifier (configured grant index);
Counter sidelink assignment index;
SL PRS resource ID;
SL PRS resource set ID; and
SL PRS ID.

In some embodiments, the second scheduling information may be applicable to dynamic scheduling or Configured Grant Type 2.

In some embodiments, the second scheduling information may not include a PSFCH-to-HARQ feedback timing indicator.

In some embodiments, the first terminal device may receive configuration information sent by an access network device (e.g., a base station), and the configuration information may be used to configure a resource allocation mode of the SL PRS. The configuration information may also be referred to as resource mode configuration information.

The resource allocation mode may be a first resource allocation mode (mode 1) and a second resource allocation mode (mode 2), wherein the first resource allocation mode (mode 1) may be a resource allocation mode based on scheduling by a network device (such as an access network device), and the second resource allocation mode (mode 2) may be a mode in which the terminal device autonomously selects resources.

The resource allocation mode may be configured for the SL PRS alone, or the resource allocation mode may be configured for the direct link, and the SL PRS may reuse the resource allocation mode of the direct link.

It should be noted that, unless there is any contradiction, this embodiment can be combined with the aforementioned embodiments or implementation methods of the present disclosure and their various optional implementations. The specific implementation methods of the above steps in this embodiment can also refer to the description in the aforementioned embodiments of the present disclosure, and will not be repeated here.

Using the above method, the scheduling scheme of SL PRS can be implemented.

In an exemplary embodiment, the present disclosure also provides a communication system, which may include a first terminal device and a network device, wherein the first terminal device can execute the method for sending scheduling information involving the terminal device in the aforementioned embodiment of the present disclosure, and the network device can execute the method for sending scheduling information involving the network device in the aforementioned embodiment of the present disclosure.

FIG. 14 is a block diagram of an apparatus 2100 for sending scheduling information according to an exemplary embodiment. The apparatus may be applied to a first terminal device. As shown in FIG. 14, the apparatus 2100 may include:
a first sending module 2101, configured to send first scheduling information; wherein the first scheduling information is used to instruct the first terminal device to send a sidelink positioning reference signal (SL PRS) to a second terminal device.

In some embodiments, the first sending module 2101 is configured to send the first scheduling information through a first channel; the first channel includes a physical sidelink control channel (PSCCH) and/or a physical sidelink shared channel (PSSCH).

In some embodiments, the first sending module 2101 is configured to send the first scheduling information via sidelink control information (SCI).

FIG. 15 is a block diagram of an apparatus 2100 for sending scheduling information according to an exemplary embodiment. As shown in FIG. 15, the apparatus 2100 may further include:
a first processing module 2102, configured to determine positioning reference signal resource information; the positioning reference signal resource information is used to indicate the wireless resources for transmitting the SL PRS; and determine the first scheduling information according to the positioning reference signal resource information.

In some embodiments, the first processing module 2102 is configured to determine the positioning reference signal resource information according to first resource information pre-set for the first terminal device.

FIG. 16 is a block diagram of an apparatus 2100 for sending scheduling information according to an exemplary embodiment. As shown in FIG. 16, the apparatus 2100 may further include:
a first receiving module 2103, configured to receive a second message; the second message includes the positioning reference signal resource information, the second message is a message sent by a third terminal device to the first terminal device, or the second message is a message sent by a network device to the first terminal device, and the network device includes an access network device or a location management function (LMF); and
the first processing module 2102 is configured to determine the positioning reference signal resource information according to the second message.

In some embodiments, the SCI is one piece of SCI, and the SCI includes all scheduling information for instructing the first terminal device to send a SL PRS to the second terminal device.

In some embodiments, the SCI includes a first-stage SCI and a second-stage SCI, and the first-stage SCI and the second-stage SCI respectively include partial scheduling information for instructing the first terminal device to send a SL PRS to the second terminal device.

In some embodiments, the first-stage SCI includes a second-stage SCI format and/or offset indication.

In some embodiments, the second-stage SCI includes at least one of the following:
Source-side terminal device identifier;
Destination-side terminal device identifier;
Cast type indicator;
Channel state information request;
Zone ID;
Communication range requirement; and
Providing/Requesting indicator.

In some embodiments, the first receiving module 2103 is configured to receive second scheduling information sent by the network device;

The first processing module is further configured to determine the first scheduling information according to the second scheduling information.

In some embodiments, the resource indicated by the second scheduling information is a dynamically scheduled resource or a configured grant (CG) resource, wherein:
In the case where the resource indicated by the second scheduling information is the dynamically scheduled resource, the second scheduling information is scrambled using a first RNTI, where the first RNTI is a sidelink radio network temporary identifier (SL-RNTI) or a dedicated RNTI for the SL PRS using dynamically scheduled resource; or,

In the case where the resource indicated by the second scheduling information is the CG resource, the second scheduling information is scrambled using a second RNTI, where the second RNTI is a sidelink configuration scheduling radio network temporary identifier (SLCS-RNTI) or a dedicated RNTI for the SL PRS using configured grant resources.

In some embodiments, the second scheduling information does not include a HARQ feedback timing indication corresponding to a physical sidelink feedback channel (PSFCH).

In some embodiments, the first receiving module 2103 is further configured to receive resource mode configuration information sent by the network device; the resource mode configuration information is used to indicate the resource allocation mode of the SL PRS, and the resource allocation mode is a first resource allocation mode based on resource selection by the network device or a second resource allocation mode based on resource selection by the terminal device; when the resource allocation mode is the first resource allocation mode, the first receiving module 2103 receives the second scheduling information sent by the network device.

In some embodiments, the first scheduling information includes at least one of the following:
Priority;
Resource reservation period;
Conflict information receiver flag;
Scheduling identifier indicating whether the first scheduling information is used for SL PRS transmission;
SL PRS resource identifier;
SL PRS resource set identifier;
SL PRS identifier (SL PRS ID);
SL PRS sequence identifier;
SL PRS sequence frequency hopping flag used to indicate whether to perform SL PRS sequence frequency hopping;
Cyclic shift;
Comb number;
Comb offset;
Repetition number;
Number of antenna ports;
Antenna port index;
Number of symbols occupied by SL PRS;
Starting symbol offset of SL PRS;
Frequency hopping flag used to indicate whether frequency hopping is performed;
Frequency hopping bandwidth;
Resource pool index;
SL start sub-channel index; and
SL sub-channel size.

In some embodiments, the first scheduling information does not include at least one of the following information:
Demodulation reference signal pattern;
Number of DMRS ports;
Modulation and Coding Scheme (MCS);
Additional MCS table indicator; and
Physical Sidelink Feedback Channel (PSFCH) overhead indication.

FIG. 17 is a block diagram of an apparatus 2200 for sending scheduling information according to an exemplary embodiment. The apparatus can be applied to a network device. As shown in FIG. 15, the apparatus 2200 may include:
a second sending module 2201, configured to send a second message to a first terminal device; the second message includes positioning reference signal resource information, and the positioning reference signal resource information is used to instruct the first terminal device to determine first scheduling information, and the first scheduling information is used to instruct the first terminal device to send a sidelink positioning reference signal (SL PRS) to the second terminal device.

In some embodiments, the second sending module 2201 is further configured to send second scheduling information to the first terminal device; the second scheduling information is used to instruct the first terminal device to determine the first scheduling information.

In some embodiments, the second sending module 2201 is further configured to send resource mode configuration information to the first terminal device; the resource mode configuration information is used to indicate the resource allocation mode of the SL PRS, and the resource allocation mode is a first resource allocation mode based on resource selection by the network device or a second resource allocation mode based on resource selection by the terminal device; when the resource allocation mode is the first resource allocation mode, the second sending module 2201 sends the second scheduling information to the first terminal device.

Regarding the apparatus in the above embodiment, the specific manner in which each module performs operations has been described in detail in the embodiment of the method, and will not be elaborated here.

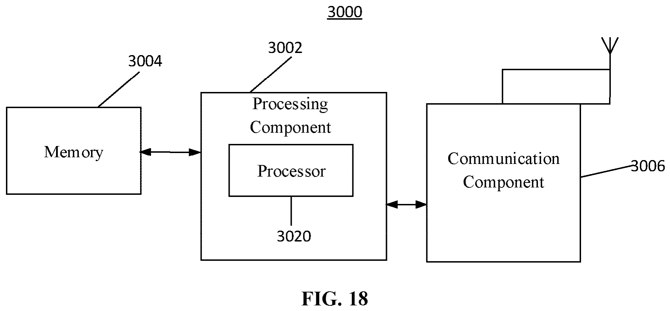

FIG. 18 is a block diagram of a device for sending scheduling information according to an exemplary embodiment. The device 3000 for sending scheduling information may be a terminal device (e.g., a first terminal device or a second terminal device) in the communication system shown in FIG. 1, or may be a network device in the communication system.

Referring to FIG. 18, the device 3000 may include one or more of the following components: a processing component 3002, a memory 3004, and a communication component 3006.

The processing component 3002 can be used to control the overall operation of the device 3000, such as operations associated with display, phone calls, data communications, camera operations, and recording operations. The processing component 3002 can include one or more processors 3020 to execute instructions to complete all or part of the steps of the above-mentioned method for sending scheduling information. In addition, the processing component 3002 can include one or more modules to facilitate the interaction between the processing component 3002 and other components. For example, the processing component 3002 can include a multimedia module to facilitate the interaction between the multimedia component and the processing component 3002.

The memory 3004 is configured to store various types of data to support the operation of the device 3000. Examples of such data include instructions for any application or method operating on the device 3000, contact data, phone book data, messages, pictures, videos, etc. The memory 3004 can be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The communication component 3006 is configured to facilitate wired or wireless communication between the device 3000 and other devices. The device 3000 can access a wireless network based on a communication standard, such as Wi-Fi, 2G, 3G, 4G, 5G, 6G, NB-IOT, eMTC, etc., or a combination thereof. In an exemplary embodiment, the communication component 3006 receives a broadcast signal or broadcast-related information from an external broadcast management system via a broadcast channel. In an exemplary embodiment, the communication component 3006 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above-mentioned method of sending scheduling information.

The above-mentioned device 3000 may be an independent electronic device or a part of an independent electronic device. For example, in one embodiment, the electronic device may be an integrated circuit (IC) or a chip, wherein the integrated circuit may be an IC or a collection of multiple ICs; the chip may include but is not limited to the following types: GPU (Graphics Processing Unit), CPU (Central Processing Unit), FPGA (Field Programmable Gate Array), DSP (Digital Signal Processor), ASIC (Application Specific Integrated Circuit), SOC (System on Chip, SoC), etc. The above-mentioned integrated circuit or chip may be used to execute executable instructions (or codes) to implement the above-mentioned method of sending scheduling information. The executable instructions may be stored in the integrated circuit or chip, or may be obtained from other devices or equipment, for example, the integrated circuit or chip includes a processor, a memory, and an interface for communicating with other devices. The executable instruction may be stored in the processor, and when the executable instruction is executed by the processor, the above-mentioned method of sending scheduling information is implemented; alternatively, the integrated circuit or chip may receive the executable instruction through the interface and transmit it to the processor for execution, so as to implement the above-mentioned method of sending scheduling information.

In an exemplary embodiment, the present disclosure further provides a computer-readable storage medium having computer program instructions stored thereon, which, when executed by a processor, implements the steps of the method for sending scheduling information provided by the present disclosure. By way of example, the computer-readable storage medium may be a non-temporary computer-readable storage medium including instructions, for example, the above-mentioned memory 3004 including instructions, and the above-mentioned instructions may be executed by the processor 3020 of the device 3000 to implement the above-mentioned method for sending scheduling information. For example, the non-temporary computer-readable storage medium may be a ROM, a random access memory (RAM), a CD-ROM, a magnetic tape, a floppy disk, an optical data storage device, and the like.

In another exemplary embodiment, a computer program product is further provided. The computer program product includes a computer program executable by a programmable device, and the computer program has a code portion for executing the above method for sending scheduling information when executed by the programmable device.

Those skilled in the art will readily appreciate other embodiments of the present disclosure after considering the specification and practicing the present disclosure. This application is intended to cover any variations, uses or adaptations of the present disclosure, which follow the general principles of the present disclosure and include common knowledge or customary techniques in the art that are not disclosed in the present disclosure. The specification and examples are intended to be exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A method for sending scheduling information, performed by a first terminal device, and the method comprising:
sending first scheduling information; wherein the first scheduling information is used to instruct the first terminal device to send a sidelink positioning reference signal (SL PRS) to a second terminal device.

2. The method according to claim 1, wherein sending the first scheduling information comprises:
sending the first scheduling information through a first channel; wherein the first channel comprises a physical sidelink control channel (PSCCH) and/or a physical sidelink shared channel (PSSCH).

3. The method according to claim 1, wherein sending the first scheduling information comprises:
sending the first scheduling information through sidelink control information (SCI).

4. The method according to claim 1, wherein the first scheduling information is obtained by:
determining positioning reference signal resource information; wherein the positioning reference signal resource information is used to indicate radio resources for transmitting the SL PRS; and
determining the first scheduling information according to the positioning reference signal resource information.

5. The method according to claim 4, wherein determining the positioning reference signal resource information comprises:
determining the positioning reference signal resource information according to first resource information pre-set for the first terminal device.

6. The method according to claim 4, wherein determining the positioning reference signal resource information comprises:
receiving a second message; wherein the second message comprises the positioning reference signal resource information, and wherein the second message is a message sent by a third terminal device to the first terminal device, or the second message is a message sent by a network device to the first terminal device, wherein the network device comprises an access network device or a location management function (LMF); and
determining the positioning reference signal resource information according to the second message.

7. The method according to claim 3, wherein the SCI is one piece of SCI, and the SCI comprises all scheduling information for instructing the first terminal device to send the SL PRS to the second terminal device.

8. The method according to claim 3, wherein the SCI comprises first-stage SCI and second-stage SCI, and the first-stage SCI and the second-stage SCI respectively comprise partial scheduling information for instructing the first terminal device to send the SL PRS to the second terminal device.

9. The method according to claim 8, wherein the first-stage SCI comprises a second-stage SCI format and/or an offset indication.

10. The method according to claim 7, wherein the second-stage SCI comprises at least one of:
a source-side terminal device identifier;
a destination-side terminal device identification;
a cast type indicator;
a channel state information request;
a zone identification;
a communication range requirement; or
a providing indicator or requesting indicator.

11. The method according to claim 1, further comprising:
receiving second scheduling information sent by a network device, where the second scheduling information is used by the first terminal device to determine the first scheduling information; and
determining the first scheduling information according to the second scheduling information.

12. The method according to claim 10, wherein a resource indicated by the second scheduling information is a dynamically scheduled resource or a configured grant (CG) resource, wherein:
in a case where the resource indicated by the second scheduling information is the dynamically scheduled resource, the second scheduling information is scrambled using a first RNTI, wherein the first RNTI is a sidelink radio network temporary identifier (SL-RNTI) or a dedicated RNTI for the SL PRS using the dynamically scheduled resource; or,
in a case where the resource indicated by the second scheduling information is the CG resource, the second scheduling information is scrambled using a second RNTI, and the second RNTI is a sidelink configuration scheduling radio network temporary identifier (SLCS-RNTI) or a dedicated RNTI for the SL PRS using the CG resource.

13. The method according to claim 10, wherein the second scheduling information does not include a HARQ feedback timing indication corresponding to a physical sidelink feedback channel (PSFCH).

14. The method according to claim 10, further comprising:
receiving resource mode configuration information sent by the network device; wherein the resource mode configuration information is used to indicate a resource allocation mode of the SL PRS, and the resource allocation mode is a first resource allocation mode based on resource selection by the network device or a second resource allocation mode based on resource selection by the terminal device; and
the receiving the second scheduling information sent by the network device comprises:
receiving the second scheduling information sent by the network device when the resource allocation mode is the first resource allocation mode.

15. The method according to any one of claims 1 to 14, wherein the first scheduling information comprises at least one of:
a priority;
a resource reservation period;
a conflict information receiver flag;
a scheduling identifier indicating whether the first scheduling information is used for SL PRS transmission;
an SL PRS resource identifier;
an SL PRS resource set identifier;
an SL PRS identifier;
an SL PRS sequence identifier;
an SL PRS sequence frequency hopping flag used to indicate whether to perform SL PRS sequence frequency hopping;
a cyclic shift;
a comb number;
a comb offset;
a repetition number;
a number of antenna ports;
an antenna port index;
a number of symbols occupied by SL PRS;
a starting symbol offset of SL PRS;
a frequency hopping flag used to indicate whether frequency hopping is performed;
a frequency hopping bandwidth;
a resource pool index;
an SL start sub-channel index; or
an SL sub-channel size.

16. A method for sending scheduling information, performed by a network device, and the method comprising:
sending a second message to a first terminal device; wherein the second message comprises positioning reference signal resource information, the positioning reference signal resource information is used to instruct the first terminal device to determine first scheduling information, and the first scheduling information is used to instruct the first terminal device to send a sidelink positioning reference signal (SL PRS) to the second terminal device.

17. The method according to claim 16, wherein the method further comprises:
sending second scheduling information to the first terminal device; wherein the second scheduling information is used to instruct the first terminal device to determine the first scheduling information.

18. The method according to claim 17, wherein the method further comprises:
sending resource mode configuration information to the first terminal device; wherein the resource mode configuration information is used to indicate a resource allocation mode of the SL PRS, and the resource allocation mode is a first resource allocation mode based on resource selection by the network device or a second resource allocation mode based on resource selection by the terminal device; and
the sending the second scheduling information to the first terminal device comprises:
sending the second scheduling information to the first terminal device when the resource allocation mode is the first resource allocation mode.

19. An apparatus for sending scheduling information, applied to a first terminal device, and the apparatus comprising:
a first sending module, configured to send first scheduling information; wherein the first scheduling information is used to instruct the first terminal device to send a sidelink positioning reference signal (SL PRS) to a second terminal device.

20. An apparatus for sending scheduling information, applied to a network device, and the apparatus comprising:
a second sending module, configured to send a second message to a first terminal device; wherein the second message comprises positioning reference signal resource information, the positioning reference signal resource information is used to instruct the first terminal device to determine first scheduling information, and the first scheduling information is used to instruct the first terminal device to send a sidelink positioning reference signal (SL PRS) to the second terminal device.

21. A device for sending scheduling information, comprising:
a processor; and
a memory for storing processor-executable instructions;
wherein the processor is configured to execute steps of the method according to any one of claims 1 to 15, or the processor is configured to execute steps of the method according to any one of claims 16 to 18.

22. A computer-readable storage medium, on which computer program instructions are stored, wherein when the computer program instructions are executed by a processor, steps of the method according to any one of claims 1 to 15 are implemented, or when the computer program instructions are executed by a processor, steps of the method according to any one of claims 16 to 18 are implemented.

23. A communication system, comprising:
a first terminal device, which executes the method according to any one of claims 1 to 15; and
a network device, which executes the method according to any one of claims 16 to 18.
